Europäisches Patentamt

European Patent Office

Office européen des brevets

(19)

(11) Veröffentlichungsnummer: **0 113 004**
**B1**

(12) **EUROPÄISCHE PATENTSCHRIFT**

(45) Veröffentlichungstag der Patentschrift: **13.06.90**

(21) Anmeldenummer: **83111308.9**

(22) Anmeldetag: **12.11.83**

(51) Int. Cl.⁵: **C 08 L 61/14,** C 08 G 8/10,
C 08 G 8/06, C 08 K 3/22,
C 08 K 3/38, C 08 K 3/34,
C 08 J 9/14

(54) **Nicht brennbarer Hartschaum und seine Verwendung als Baustoff.**

(30) Priorität: **03.12.82 DE 3244779**

(43) Veröffentlichungstag der Anmeldung:
**11.07.84 Patentblatt 84/28**

(45) Bekanntmachung des Hinweises auf die
Patenterteilung:
**13.06.90 Patentblatt 90/24**

(84) Benannte Vertragsstaaten:
**AT BE CH DE FR GB IT LI LU NL SE**

(56) Entgegenhaltungen:
EP-A-0 004 634
EP-A-0 059 618
DE-B-2 717 775
DE-B-2 825 295
GB-A-2 089 812
GB-A-2 097 402
US-A-3 740 358

(73) Patentinhaber: **Rühl, Erich**
**Hugenottenstrasse 105**
**D-6382 Friedrichsdorf (DE)**

(72) Erfinder: **Rühl, Erich**
**Saalburgstrasse 65**
**D-6382 Friedrichsdorf/Ts. (DE)**
Erfinder: **Thenner, Johann, Dipl.-Ing. Dr.**
**Heinestrasse 7**
**D-6301 Pohlheim 1 (DE)**

(74) Vertreter: **Sternagel, Hans-Günther, Dr. et al**
**Patentanwälte Dr. Michael Hann Dr. H.-G.**
**Sternagel Sander Aue 30**
**D-5060 Bergisch Gladbach 2 (DE)**

## Beschreibung

Gegenstand der Erfindung ist ein nicht brennbarer, Füllstoff enthaltender Hartschaum auf Basis von Phenolharz und Furanharz mit einem Raumgewicht von 50 kg/m³ bis 450 kg/m³, der den Erfordernissen nach DIN 4102 und DIN 53436 genügt, so daß er als nicht brennbarer Baustoff verwendet werden kann.

Phenolharzschaumstoffe werden bereits in Rohdichten von 40 bis 100 kg/cm³ hergestellt. Wegen ihrer relativ hohen Geschlossenzelligkeit von etwa 75% werden diese im Bauwesen hauptsächlich als Wärmedämmstoff verwendet. Bei diesen duroplastischen Schaumstoffen erfolgt wegen ihrer dreidimensionalen Vernetzung im Brandfalle vornehmlich verstärkte Verkohlung. Die entstehende Kohlenstoffschicht schützt den darunterliegenden Schaum vor weiterem Flammenangriff und ferner bewirkt diese Kohlenstoffschicht im Falle einer Zündung von Pyrolysegasen ein Erlöschen der Flamme.

Das Brennverhalten ist ein Vorgang, der sich an der Oberfläche des Schaumstoffes abspielt, d.h. das Ausmaß des Brennens wird durch die zur Verfügung stehende Oberfläche bestimmt, die bei Schaumstoffen mit Raumgewichten bis zu 40 kg/m³ herab sehr groß ist. Dies hat zur Folge, daß das brennbare Material im gesamten Flammen- und Strahlungsbereich beinahe vollständig pyrolsiert wird. Fördernd wirkt sich hier noch eine gewisse Geschlossenzelligkeit und die damit verbundene geringe Wärmeleitfähigkeit aus, die zu einem Wärmestau führt. Dies unterstützt zusätzlich die Pyrolyse und den Brennvorgang.

Eine Wärmebeständigkeit bei Phenolharzschäumen besteht bis etwa 130°C, möglich ist eine kurzzeitige Belastung bis 250°C. Die Emission flüchtiger Gase beginnt bei 270°C, welche bei offener Flamme kurzzeitig brennen. Ab 400°C ist nur noch ein Glimmen zu beobachten, welches durch Oxidationsvorgänge an der Oberfläche der festen Kohlenstoffharze verursacht wird. Ein Zusatz von Borsäure zu Phenolharz wirkt als Flammschutzmittel. Da jedoch Borsäure als langsam wirkende Härter die Standzeit des Phenolharzes auf 24 Stunden beschränkt, führt der Zusatz von Borsäure als Flammschutzmittel zu Phenolharzmischungen zu Verarbeitungsschwierigkeiten, insbesondere ist die Zugabe nur unmittelbar vor der Verarbeitung möglich.

J. Troitsch weist in Kunststoffe 69/9; Seite 558—561 (1979) darauf hin, daß es nur wenige anorganische Verbindungen gibt, die sich als Flammschutzmittel für den Einsatz in Kunststoffen eignen. Aluminiumhydroxid und borhaltige Verbindungen werden für diesen Zweck eingesetzt, weil sie sich in Kunststoffe einarbeiten lassen.

J. Greber und D. J. Braun beschreiben in Plastverarbeiter 33/1; Seite 43—46 (1982), daß Aluminiumhydroxid als ein flammenhemmender Füllstoff für ungesättigte Polyesterharze verwendet werden kann. Um Bauteile herzustellen, die bei der Brandprüfung nach DIN 4102 zur Einstufung in die Klasse B1 (schwer entflammbar) führen, sind Füllstoffgehalte von mehr als 55 Gew.% erforderlich. Bei den notwendigen hohen Füllgraden stellen sich jedoch erhebliche Verarbeitungsprobleme ein, die nur teilweise durch Verwendung von speziellen Aluminiumhydroxiden überwunden werden können. Da das Brandverhalten von Materialien nicht nur durch den Anteil von Flammschutzmittel in der Mischung, sondern auch vom konstruktiven Aufbau der Prüfkörper bestimmt wird, ist die Ausrüstung von ungesättigten Polyesterharzen mit Aluminiumhydroxid als Flammschutzmittel problematischer als der Brandschutz mit üblichen Halogen-Antimon-Systemen.

Aus DE-OS 28 25 295 ist ein nicht brennbarer Werkstoff, der keine toxischen Rauchgase entwickelt, auf Basis von Phenolharzen und Furfurylalkohol bekannt. Der Werkstoff enthält als anorganischen Füllstoff 62—66 Gew.% Aluminiumoxid oder Aluminiumhydroxid und kann zusätzlich noch bis zu 3 Gew.% feinteilige Kieselsäure und weitere andere Bestandteile enthalten. Durch Zusatz von Treibmitteln läßt sich ein geschlossenporiger Hartschaum mit einem Raumgewicht von 500 g/l herstellen.

Der Werkstoff weist jedoch eine Reihe von Nachteilen auf.

Wegen der Anwendung von organischen Sulfosäuren als Einzelkomponente im Härtersystem ist das ausgehärtete Fertigprodukt hygroskopisch und damit auch durch eine verlängerte Reifezeit gekennzeichnet.

Es wurde festgestellt, daß wegen der hohen Dichte die Reifezeit bis zur endgültigen Festigkeit einige Wochen beträgt. Überdies ist dieser Werkstoff gegenüber metallischen Oberflächen korrodierend.

Infolge der hohen Viskosität des Reaktionsgemisches bildet sich beim Schäumen ein weitgehend inhomogenes Schaumgefüge aus.

Überdies ist bei Brandbelastung der Anteil von Schwefeldioxid im Rauch- bzw. Schwelgas noch sehr hoch.

Aufgabe der vorliegenden Erfindung ist es, einen Hartschaum mit einem Raumgewicht unter 500 kg/m³ zu schaffen, der bei Brandbelastung keine toxischen oder korrosiven Gase abgibt, dessen mechanische und isolierende Eigenschaften seine Verwendung im Baubereich ermöglichen und der den Anforderungen, Klasse A2 (nicht brennbar), bei der Brandprüfung nach DIN 4102 genügt.

Die Aufgabe wird gelöst durch den nicht brennbaren Hartschaum gemäß den Patentansprüchen.

Der erfindungsgemäße, Aluminiumhydroxid als Füllstoff enthaltende Hartschaum besteht aus einer Harzkomponente und einer Füllstoffmischung, wobei das Gewichtsverhältnis Harzkörper: Füllstoff gemisch 1:2,5 und das Raumgewicht 50 kg/m³ bis 450 kg/m³ beträgt.

Die Harzkomponente wird erhalten durch Umsetzung von 50—62 Gewichtsteilen Resolharz, 0—15 Gewichtsteilen Furanharz, 25—40 Gewichtsteilen Furfurylalkohol, 0,5—1,5 Gewichtsteilen Schaumstabilisator zusammen mit dem Füllstoffgemisch mit 14—17 Gewichtsteilen pro 100 Gewichtsteile Harzkomponente plus Füllstoff, einer Härtermischung aus 40—50 Gewichtsteilen Phosphorsäure, 12—17 Gewichtsteilen Borfluorwasserstoffsäure, 6—7 Gewichtsteilen p-Toluolsulfonsäure oder p-Phenolsulfonsäure und 32—35 Gewichtsteilen Wasser.

Für die Harzkomponente wird ein Resolharz, d.h. ein Vorkondensat aus Phenol und Formaldehyd mit einem mittleren Molekulargewicht von 500 und ein Vorkondensat aus Furfurylalkohol und Furfurylaldehyd zusammen mit weiterer Furfurylalkohol mit einem Härtergemisch zur Umsetzung gebracht. In einer exothermen Reaktion setzt der Härteprozeß nach einer einstellbaren Startzeit ein. Die entwickelte Wärmemenge ist ausreichend, um ein Treibmittel, z.B. Fluorkohlenwasserstoffe, so weit zu verdampfen, daß das gewünschte Schaumgefüge entsteht. Das Treibmittel kann der Harzkomponente zugesetzt sein, wenn es sich um eine feststehende Formulierung für ein konstantes Raumgewicht handelt oder wird als zusätzliche Komponente unmittelbar beim Mischen der Harzvorprodukte und der Härtermischung zugefügt.

Durch den Zusatz geeigneter Füllstoffe werden im Brandfalle die flüchtigen Pyrolyseprodukte bereits unterhalb der Entzündungstemperatur in Freiheit gesetzt. Dabei hat sich ein Verhältnis Harzkörper zu anorganischem Füllstoff von 1:2,5 als notwendig erwiesen, um die Unbrennbarkeit nach DIN 4102 zu erreichen. Höhere Füllstoffgehalte bis zu einem Verhältnis von 1:3,20 sind grundsätzlich möglich, es muß jedoch darauf geachtet werden, daß die Viskosität nicht zu stark ansteigt und die Schaumbildung behindert ist.

Die bei Brandbelastung freiwerdenden Pyrolyse-Produkte können durch verschiedene Kombinationen der Füllstoffe für das weitere Brandgeschehen unschädlich gemacht werden.

Wegen des geringeren Raumgewichts eines Schaumstoffes gegenüber einem kompakten Körper wird pro Volumen weniger brennbare Substanz angeboten. Demgegenüber ist jedoch ein von der Oberfläche mehr in die Tiefe des Schaumkörpers reichender Bereich dem Brand ausgesetzt durch die Oberflächenvergrößerung infolge der vielen Zellen des Schaumstoffes. Diese Vergrößerung der aktiven inneren Oberfläche kann jedoch benutzt werden, um die bei Brandbelastung auftretenden Pyrolyse-Produkte so weit zu oxidieren, daß sie entweder nicht mehr brennbar sind oder die Kohlenmonoxidbildung weitgehend verhindert ist.

Der Hauptanteil des anorganischen Füllstoffgemisches ist ein Aluminiumhydroxid, vorzugsweise mit einer bestimmten Korngrößenverteilung. Diese ist deshalb wünschenswert, weil bei unterschiedlich großer aktiver Oberfläche dieses Füllstoffes eine nicht ausreichende Benetzung durch das Harz erfolgen kann, so daß der Zusammenhalt im ausgehärteten Zustand mangelhaft wird. Schließlich kann die Viskosität des Gemisches aus Harzkomponente und Füllstoff für die Verarbeitung zu hoch werden.

Das am besten geeignete Aluminiumhydroxid weist eine Siebdurchgangssummenkurve mit den Werten

|     |         |
|-----|---------|
| 25% | 5,5 µm  |
| 50% | 52,0 µm |
| 75% | 80,0 µm |

auf. Andere Verteilungszusammensetzungen können ebenfalls verwendet werden, sofern die Teilchen eine geeignete Teilchenform aufweisen, beispielsweise vorzugsweise kugelförmig sind.

Die Wirksamkeit des Aluminiumhydroxids als Flammschutzmittel beruht neben einer Verdünnung des Systems auf einem rein physikalischen Effekt. In einem endothermen Prozeß wird bei Brandbelastung Wasser abgespalten und es erfolgt eine Verdünnung der brennbaren Pyrolyse-Produkte und gleichzeitig auch Kühlung unter Verringerung des Wärmeüberganges in tiefergelegene Schaumbereiche.

Um den Verarbeitungsschwierigkeiten infolge zo hoher Viskosität der Massen vor dem Aufschäumen bei sehr hohen Aluminiumhydroxidgehalten zu begegnen, wird erfindungsgemäß ein Teil des Aluminiumhydroxids durch andere Stoffe ersetzt, also eine Füllstoffmischung verwendet.

Die Zusatzmengen an Füllstoffen betragen in Gew.%, bezogen auf Gesamtfüllstoff- und Harzkomponente:

| | |
|---|---|
| 40—55 | Gew.% Aluminiumhydroxid |
| 2—7 | Gew.% Natriumtetraborat |
| 10—35 | Gew.% Borsäure |
| 1—5 | Gew.% Kupfer-II-Oxid |
| 5—10 | Gew.% Mangandioxid |
| 1—4 | Gew.% Magnesiumhydroxysilikat |
| 1—2 | Gew.% Aluminiumsilikat. |

Dabei ist ein Verhältnis Borat:Borsäure von 1:5 einzuhalten. Die Borsäure wird nur im Gemisch mit Natriumtetraborat verwendet, weil ohne Zusatz des Borats der Härteprozeß vorzeitig ablaufen würde.

Die Verwendung von Borverbindungen als Füllstoff hat den Vorteil, daß bei Brandbelastung zunächst eine stufenweise Abgabe von Wasser im Rahmen einer endothermen Reaktion unter Bildung von Borsäureanhydrid erfolgt. Das Harzporenskelett wird von einem glasartigen Überzug geschützt, weil Borsäureanhydrid bei etwa 350°C erweicht und ab 500°C zu fließen beginnt. Schließlich erfolgt durch säure katalysierte Wasserentfernung aus der organischen Substanz eine Dehydratisierung, die zu einer

3

EP 0 113 004 B1

verstärkten Verkohlung (Karbonisierung) der Harzkomponente führt.

Durch den Zusatz von Kupferoxid und Manganoxid als Oxidationsmittel zum Füllstoff wird erreicht, daß funktionelle Gruppen der Harze während des gesamten ablaufenden Härteprozesses oxidativ umgewandelt werden, wobei Zyklisierung und Kondensation zu kohlenstoffreicheren Produkten führen. Diese begünstigen im Brandbelastungsfalle die Karbonisierung und schützen dann die unterhalb der eigentlichen Flammenzone befindliche Harzphase. Überdies wird bereits gebildetes Kohlenmonoxid in der unter der Carbonisierungszone liegenden geschlossenzelligen Schaumstruktur zu Kohlendioxid oxidiert (Erniedrigung der Toxität).

Weitere anorganische Zusätze, wie Magnesiumhydrosilikate oder wasserhaltige Aluminiumsilikate, z.B. Bentonit, haben den Zweck, sich entweder mit den anorganischen Härterkomponenten umzusetzen oder zugesetztes bzw. bei der Kondensation gebildetes Wasser zu binden.

Die Härtermischung besteht hauptsächlich aus anorganischen Säuren mit einem geringen Anteil an p-Toluolsulfonsäure oder p-Phenolsulfonsäure. Die alleinige Verwendung organischer Sulfonsäuren ist nachteilhaft, da im Falle einer Brandbelastung oder bei Einwirkung von Schweltemperaturen (300—500°C) gebildetes Schwefeldioxid im Schwelgas-Gleichgewicht eine vermehrte Bildung von Kohlenmonoxid ergibt.

Im Hinblick auf einen zeitlich günstigen Reaktionsbeginn (Startzeit, Steigzeit des Schaumes) und einer möglichst geringen Zusatzmengen an Härter haben sich folgende Säurekombinationen als Härter als besonders geeignet erwiesen:

| 100%ige Phosphorsäure Gew.% | 100%ige Borfluorwasser- stoffsäure Gew.% | 100%ige Paratoluol- sulfosäure oder Para- phenolsulfo- saure, Gew.% | Wasser Gew.% |
|---|---|---|---|
| 41,5 | 17 | 6,9 | 34,6 |
| 45,9 | 14,3 | 6,6 | 33,2 |
| 49,0 | 12,2 | 6,6 | 32,2 |

Die Verwendung der Phosphorsäure im Härtekatalysator hat neben der Wasserstoffionen abgebenden Funktion nach folgende Wirkung:

Bei Brandbelastung ist die Phosphorsäure bei den in der Harzphase ablaufenden Reaktionen in ähnlicher Weise wie Borsäure wirksam. Es entsteht polymere Phosphorsäure, welche eine Pyrolyse durch Ausbildung eines glasigen Überzuges über die bereits gebildete kohlehaltige Porenstruktur hemmt. Diese Abdämmung gegen den Angriff von Sauerstoff und Wärmestrahlung ist hochtemperaturfest. Durch Entstehung stark reduzierend wirkender Phosphide wird die Bildung von CO und $CO_2$ zugunsten einer Kohlenstoffbildung gebremst. Auch das sogenannte Nachglimmen, hervorgerufen durch Oxidation des Kohlenstoffs zu CO und $CO_2$ ist eingeschränkt.

Auch die verwendete Borfluorwasserstoffsäure bewirkt noch eine Verbesserung der Nichtbrennbarkeit des Schaumstoffes. Mit den Füllstoffen gebildete Fluorborate werden durch Abgabe von Bortrifluorid in der Gasphase im Brandfalle wirksam.

Das erfindungsgemäße Hartschaumsystem ist ein Zweikomponentensystem aus Harzkomponente und Füllstoff (Komponente A) und Härter (Komponente B), wobei das Treibmittel entweder der Komponente A zugemischt sein kann oder als Komponente C unmittelbar vor der Verarbeitung eingebracht wird.

Als Treibmittel eignen sich vor allem niedere Chlorfluorkohlenwasserstoffe, wie z.B. Trifluormonochlormethan oder Trichlortrifluorethan, sowie n-Pentan, alle mit einem Siedepunkt im Bereich von etwa 24°C bis 48°C. Bei Austausch eines Treibmittels (Trichlortrifluorethan) gegen ein anderes der oben angeführten ist die angesetzte Menge durch einen Faktor zu dividieren:

Tausch von Trichlortrifluorethan (F=1)
gegen n-Pentan F=2,6
gegen Trifluormonochlormethan F=1,8

So kann ein fest eingestelltes Raumgewicht bei Austausch gegen ein anderes Treibmittel beibehalten werden.

Erfahrungsgemäß ist das brennbare n-Pentan ohne Effekt auf die Unbrennbarkeit des Schaumstoffes.

Eine weitere Möglichkeit, einen Treibeffekt zu erzielen, besteht durch Eindüsen von Preßluft in die Vormischkammer des Intensivmischers beim Verarbeiten der Komponenten. Diese sogenannte "Nuklearisierungsluft" fördert infolge Keimbildung den Treibprozeß bei Gegenwart von Treibmitteln; sie kann aber auch schon ohne diese eine Schaumstruktur bewirken.

4

Der erfindungsgemäße Hartschaum stellt somit ein komplexes Reaktionsgemisch dar, innerhalb dessen bereits nach dem Vermischen der Komponenten A und B noch zusätzlich brandverhütende Bestandteile gebildet werden. Ferner laufen im Falle einer Brandbelastung schrittweise mit steigender Temperatur weitere Reaktionen ab, die ebenfalls einer Zündung des Schaumstoffes entgegenwirken.

Der erfindungsgemäße Hartschaum stellt aufgrund seiner mechanischen Festigkeit einen nicht brennbaren Baustoff dar, der als vorgefertigtes Teil oder zum Ausschäumen an Ort und Stelle verwendet werden kann. Die erfindungsgemäße Zusammensetzung erlaubt es, Raumgewichte zwischen 50 kg/m³ und 450 kg/m³ einzustellen. Bei Raumgewichten bis zu 150 kg/m³ entsteht ein nicht brennbarer Hartschaum mit sehr guten wärmedämmenden Eigenschaften. Raumgewichte zwischen 200 und 450 kg/m³ ergeben selbsttragende Bauteile. Vorzugsweise wird deshalb das Raumgewicht des erfindungsgemäßen Schaums im Bereich von 70 kg/m³ bis 300 kg/m³ eingestellt. Wenn eine besonders hohe Feuerwiderstandsklasse erwünscht ist bei gleichzeitig erhöhter mechanischer Beständigkeit haben sich Raumgewichte zwischen 150 kg/m³ und 250 kg/m³ als besonders geeignet erwiesen.

Der erfindungsgemäße Hartschaum füllt bei üblichen konstruktiven Gestaltungen die Erfordernisse der Klasse A2 bei der Brandbeständigkeitsprüfung im Brandschacht nach DIN 4102. Im Brandfalle entstehen im Sinne dieser DIN-Vorschrift keine toxischen Gase.

Die erfindungsgemäße Härterzusammensetzung führt zu einem so geringen Restsäuregehalt, daß bei Verbindung des Schaumes mit metallischen Dämmplatten keinerlei Korrosionserscheinungen auftreten.

Ebenso ist bei dem erfindungsgemäßen Hartschaumsystem die bei ähnlichen Systemen vorhandene Hygroskopizität starkt verringert.

Der Einsatz von vorkondensiertem Furanharz in der Harzkomponente ermöglicht eine bessere Regulierung der Reaktivität und verlängert die Steigzeit des Schaumes. Außerdem wird die Festigkeit der Zellstruktur verbessert.

Verwendet man anstelle üblicher Schaumstabilisatoren pyrogene Kieselsäure als tyxotropierenden Zusatz, läßt sich die Porenstruktur besonders gut regulieren.

Der Vorteil des Zusatzes von Kupferoxid und Manganoxid als Oxidationsmittel liegt, wie bereits angegeben, darin, daß während der Härtungsphase Umsetzungen mit den funktionellen Endgruppen der Harzkomponenten stattfinden. Dies führt im Brandfalle zur Verringerung des gebildeten Kohlenmonoxids in der geschlossenzelligen Porenstruktur und damit zu einer Verringerung der Toxität der Brandgase.

Der Zusatz von Magnesiumhydroxysilikat und Aluminiumsilikaten ermöglicht Reaktionen mit den Anionen des Härtersystems, so daß diese abgebunden werden.

Phosphorsäure und Borfluorwasserstoffsäure des Härtersystems dienen als H-Ionendonator zur Kondensation des Harzsystems. Die gebildeten Phosphate wirken gleichzeitig als weiteres Flammschutzmittel.

Für den Einsatz wird das System als Zweikomponentensystem hergestellt. Die Komponente A enthält die Harzkomponente und den Füllstoff, die Komponente B den Härter. Wie bereits angegeben, kann das Treibmittel zur Komponente A zugemischt werden oder als weitere Komponente C beim Mischen der Komponenten A und B eingebracht werden.

Eine bevorzugte Zusammensetzung der Harzkomponente besteht aus einem Gemisch von

56,6 Gew.% Resolharz
29,9 Gew.% Furfurylalkohol
12,6 Gew.% Furanharz
0,9 Gew.% Schaumstabilisator.

Ist in Fällen bestimmter Füllstoffgemische der Reaktionsbeginn nach Härterzumischung verzögert, so daß eine erhöhte Reaktivität der Harzkomponente erwünscht ist, hat sich folgende Zusammensetzung als besonders geeignet erwiesen:

60,3 Gew.% Resolharz
38,8 Gew.% Furfurylalkohol
0,9 Gew.% Schaumstabilisator.

Der Verwendungsbereich des erfindungsgemäßen Hartschaumes ist sehr breit, insbesondere eignet er sich als nicht brennbarer Baustoff. Dabei können vorgefertigte Teile hergestellt werden, wie Platten, Halbschalen, Rohrummantlungen. Es können auch kontinuierlich mit kaschierten Folien oder Blechen versehene Schaumplatten auf sogenannten Zweibandmaschinen hergestellt werden. Das Zweikomponentensystem kann jedoch auch zum Ausschäumen von Hohlräumen vor Ort, wie sie beispielsweise bei Installations- oder Klimatisierungsschächten erwünscht ist, eingesetzt werden.

Vorgefertige Platten wurden einer Vorprüfung nach DIN 4102 und DIN 53436 unterzogen. Die DIN 4102 richtet sich auf die brandtechnische Prüfung im Brandschacht bzw. Ofenversuche. DIN 53436 betrifft die Rauch- und Schwelgasentwicklung bei Brandbelastung.

Dabei wurden folgende Ergebnisse erzielt:
maximale Temperaturerhöhung im Ofen bei 750°C,
Durchschnittswert von drei Messungen: 32°C

(maximal zulässiger Grenzwert: +50°C).
Im Brandschacht betrug
die Flammenhöhe 50 cm (maximaler Grenzwert 65 cm)
Restlänge: 40 cm (Grenzwert 35 cm)
Rauchgastemperatur: 105°C (Grenzwert 125°C)
Rauchgasdichte:
  sehr gering, kein Nachbrennen,
  kein Nachglimmen
Rauchgasdichte: XP2 Kammer 2% (Grenzwert 15%)
Schwelgas nach DIN 53436, 0,01 Vol.% (Grenzwert 0,04 Vol.%).
Die Erfindung wird nun anhand von Beispielen noch näher erläutert.

Beispiel 1

A-Komponente:
(Harz und Füllstoff)

| | |
|---|---|
| Phenolresol | 15,3 Gew.% |
| Furfurylalkohol | 8,1 Gew.% |
| Furanharz | 3,4 Gew.% |
| Stabilisator | 0,25 Gew.% |
| Kupferoxid | 4,2 Gew.% |
| Wasser | 4,5 Gew.% |
| Aluminiumhydroxid | 55,0 Gew.% |
| Mangandioxid | 7,25 Gew.% |
| Magnesiumhydroxysilikat | 2,0 Gew.% |
| | 100,0 Gew.% |

Reaktionsgemisch:

| | | |
|---|---|---|
| 100 Gew.-Teile | A-Komponente | |
| 2 Gew.-Teile | Treibmittel (Trichlortrifluoräthan) | |
| 17 Gew.-Teile | Härtergemisch | 41,5 Gew.% Phosphorsäure |
| | | 17,0 Gew.% Borfluorwasserstoffsäure |
| | | 6,9 Gew.% p-Toluolsulfosäure |
| | | 34,6 Gew.% Wasser |

Nach Intensivmischung erhält man einen Hartschaum mit einer Rohdichte unter 100 kg/m³.
Die Startzeit beträgt 30 Sekunden, die Steigzeit 2 Min. 15 Sek. Temperaturerhöhung des Schaumes auf etwa 90°C.

Beispiel 2

A-Komponente:
(Harz und Füllstoff)

| | |
|---|---|
| Phenolresol | 16,3 Gew.% |
| Furfurylalkohol | 10,5 Gew.% |
| Stabilisator | 0,25 Gew.% |
| Kupferoxid | 1,0 Gew.% |
| Wasser | 4,95 Gew.% |
| Aluminiumhydroxid | 48,0 Gew.% |
| Natriumtetraborat | 2,5 Gew.% |
| Borsäure | 12,5 Gew.% |
| Magnesiumhydroxysilikat | 4,0 Gew.% |
| | 100,0 Gew.% |

Reaktionsgemisch:

| | | |
|---|---|---|
| 100 Gew.-Teile | A-Komponente | |
| 3 Gew.-Teile | Treibmittel (Trifluormonochlormethan) | |
| 14 Gew.-Teile | Härtergemisch | 49 Gew.% Phosphorsäure |
| | | 12,2 Gew.% Borfluorwasserstoffsäure |
| | | 6,6 Gew.% p-Toluolsulfosäure |
| | | 32,2 Gew.% Wasser |

Dieser Ansatz ergibt einen Hartschaum mit einer Rohdichte um 100 kg/m³. Bei Erhöhung des Treibmittels auf 5 Gew. Teile ist eine Senkung des Rohgewichtes auf 80 kg/m³ erreichbar.

Startzeit: 60 Sekunden
Steigzeit: 120 Sekunden
Maximale Reaktionstemperatur: 75°C

Zu einem Hartschaum mit deutlich erhöhter Druckfestigkeit gelangt man nach Beispiel 3. Überdies ist der Kohlenmonoxidgehalt der Schwelgase etwa um das 2-1/2-fache des nach den DIN-Prüfmethode zugelassenen Grenzwertes erniedrigt.

Beispiel 3

A-Komponente
(Harz und Füllstoff)

| | | |
|---|---|---|
| Phenolresol | 16,3 | Gew.% |
| Furfurylalkohol | 10,5 | Gew.% |
| Stabilisator | 0,25 | Gew.% |
| Kupferoxid | 2,0 | Gew.% |
| Wasser | 4,95 | Gew.% |
| Aluminiumhydroxid | 22,0 | Gew.% |
| Natriumtetraborat | 7,0 | Gew.% |
| Borsäure | 35,0 | Gew.% |
| Magnesiumhydroxysilikat | 1,0 | Gew.% |
| Aluminiumsilikat | 1,0 | Gew.% |
| | 100,0 | Gew.% |

Reaktionsgemisch:

| | | |
|---|---|---|
| 100 Gew.-Teile | A-Komponente | |
| 3 Gew.-Teile | Treibmittel (Gemisch aus gleichen Teilen Trichlortrifluoräthan und Trifluormonochlormethan) | |
| 17 Gew.-Teile | Härtergemisch | 45,9 Gew.% Phosphorsäure |
| | | 14,3 Gew.% Borfluorwasserstoffsäure |
| | | 6,6 Gew.% p-Toluolsulfosäure |
| | | 33,2 Gew.% Wasser |

Dieser Ansatz gemischt ergibt einen Hartschaum mit einer Rohdichte von 150 kg/m³. Verwendet man anstatt des vorstehenden Härters den Härter von Beispiel 1, so kann die Rohdichte auf etwa 100 kg/m³ gesenkt werden. Reaktionstemperatur beim angegebenen Härter: 70°C, welche sich mit Härter von Beispiel 1 auf 90°C erhöht.

Startzeit: 120 Sekunden
Treibzeit: bis 3 Minuten

Beispiel 4

Diese Formulierung unterscheidet sich von den anderen Beispielen durch die wesentlich höhere Reaktivität des Harzsystems (exotherme Wärmetönung) und ist deshalb vornehmlich für Ausschäumungen "vor Ort" geeignet. Diese Art des Schäumens wird vor allem in der Bautechnik geübt, wo es um Verschluß von Kabel- bzw. Installationsschachtdurchbrüchen geht.

Durch Zufügen von kolloidaler Kieselsäure wird ein Thixotropie-Effekt erzielt, d.h. die Reaktionsmischung ist unmittelbar nach Austritt aus dem Mischer noch dünnflüssig, wird aber anschließend viskoser und damit dickflüssiger. Der Treibprozeß wird jedoch nicht gestört; wesentlich hierzu ist die erwähnte erhöhte Reaktivität.

| | | |
|---|---|---|
| Phenolresol | 16,3 | Gew.% |
| Furfurylalkohol | 10,5 | Gew.% |
| koll. Kieselsäure | 0,25 | Gew.% |
| Kupferoxid | 5,0 | Gew.% |
| Wasser | 4,95 | Gew.% |
| Aluminiumhydroxid | 50,0 | Gew.% |
| Mangandioxid | 10,0 | Gew.% |
| Magnesiumhydroxysilikat | 2,0 | Gew.% |
| Aluminiumsilikat | 1,0 | Gew.% |
| | 100,0 | Gew.% |

Reaktionsgemisch:

100 Gew.-Teile    A-Komponente
3 Gew.-Teile    Treibmittel (Trifluortrichlorethan)
17 Gew.-Teile    Härtergemisch von Beispiel 1.

Die Rohdichte hängt hier stark von der Schäumgeometrie ab. Kleine Volumen, wie z.B. 10—15 Liter Rauminhalt, ergeben höhere Rohdichten, da der Wärmeabzug in die angrenzenden Wandteile beträchtlich sein kann. Größere Raumteile, wie einige hundert Liter, ergeben dementsprechend niedrigere Raumgewichte. Dies wird von Fall zu Fall der Anwendung durch mögliche Dosierungsänderungen des Härtergemisches reguliert.

Vergleichsbeispiel (nach Beispiel 4 von DE—PS 28 25 295 mit 500 kg/m³ Raumgewicht)
Zusammensetzung des Systems:

| | | |
|---|---|---|
| Phenolharz | 12,8 | Gew.% |
| Furfurylalkohol | 12,8 | Gew.% |
| Äthanol | 1,3 | Gew.% |
| Butanol | 1,3 | Gew.% |
| Butylglykol | 1,9 | Gew.% |
| Paraformaldehyd | 1,9 | Gew.% |
| Epoxyharz | 0,4 | Gew.% |
| Polyesterharz | 0,3 | Gew.% |
| Aluminiumhydroxid | 64,3 | Gew.% |
| Fasern | 0,4 | Gew.% |
| $SiO_2$ | 2,6 | Gew.% |
| | 100,0 | Gew.% |

Das Verhältnis organische Substanzen/anorganische Stoffe beträgt hier 1:2,06, ein Wert, der erfahrungsgemäß zu wesentlich höheren Heizwerten führt als die Nichtbrennbarkeit entsprechend DIN 4102 zuläßt.

Ermittelt man das gleiche Verhältnis im ausgehärteten Zustand, verschiebt sich dieser Wert sogar zu 1:1,60.

Nach dieser Rezeptur nachgearbeitete Proben zeigen Viskositätswerte, welche wegen der sehr hohen Zähigkeit der sogenannten A-Komponente mit Mühe Schäume vom Raumgewicht an die 500 kg/m³ ergeben.

Überdies entwickelt sich bei Belastung bei Schweltemperatur sehr viel Schwefeldioxid—soviel, daß im Kondensat (Wasser) im Abkühlrohr der Verschwelungsapparatur (DIN 53 436) eine übermäßig große Säurereaktion festzustellen ist.

Dieser hohe Schwefeldioxidgehalt im Schwelgas ist auch die Ursache für die gemessenen CO-Konzentrationen in der Inhalationskammer (Rattentest). Dieser betrug in dem hier angeführten Beispiel 0,13 Vol% (0,04 Vol.% ist der erlaubte Maximalwert).

Dieses Schwelgas ist somit als ausgesprochen toxisch anzusehen.

Das Vergleichsbeispiel zeigt die Nachteile des bekannten Werkstoffes besonders deutlich.

Alle nach den zuvor aufgeführten Beispielen hergestellten Hartschäume benötigen vor Belastung eine Reifezeit von etwa 7 Tagen. Erst dann ist eine vollständige Durchhärtung der Zellstruktur durch Quervernetzung gewährleistet.

Die in den Beispielen beschriebenen Ansätze lassen sich mit üblichen Komponenten-Dosier- und -Mischmaschinen verarbeiten, denn durch die erfindungsgemäße Zusammensetzung ist die Viskosität des flüssigen Systems gegenüber den bekannten Systemen mit höheren Füllstoffgehalten erniedrigt.

# EP 0 113 004 B1

## Patentansprüche

1. Nicht brennbarer, Aluminiumhydroxid als Füllstoff enthaltender Hartschaum auf Basis von Phenolharz und Furanharz, wobei die Harzkomponente durch Umsetzen von Phenolharz, Furfurylalkohol und einer Sulfosäure als Härter gebildet wird, dadurch gekennzeichnet, daß das Gewichtsverhältnis Harzkörper: Füllstoffgemisch 1:2,5 bis 1:3,2 und das Raumgewicht 50 kg/m³ bis 450 kg/m³ beträgt und die Harzkomponente erhalten wurde durch Umsetzen von

| 50—62 | Gew.Tl. Resolharz |
|---|---|
| 0—15 | Gew.Tl. Furanharz |
| 25—40 | Gew.Tl. Furfurylalkohol |
| 0,5—1,5 | Gew.Tl. Schaumstabilisator |

mit 14—17 Gew.Tl. pro 100 Gew.Tl. Harzkomponente+Füllstoffgemisch einer Härtermischung aus

| 40—50 | Gew.Tl. Phosphorsäure |
|---|---|
| 12—17 | Borfluorwasserstoffsäure |
| 6—7 | Gew.Tl. p-Toluolsulfonsäure oder p-Phenolsulfonsäure und |
| 32—35 | Gew.Tl. Wasser |

2. Nicht brennbarer Hartschaum nach Anspruch 1, dadurch gekennzeichnet, daß das Füllstoffgemisch aus

| 40—55 | Gew.Tl. Aluminiumhydroxid |
|---|---|
| 10—35 | Gew.Tl. Borsäure |
| 2—7 | Gew.Tl. Natriumtetraborat |
| 5—10 | Gew.Tl. Mangandioxid |
| 1—5 | Gew.Tl. Kupfer-II-Oxid |
| 1—4 | Gew.Tl. Magnesiumhydroxysilikat |
| 1—2 | Gew.Tl. Aluminiumsilikat |

besteht, wobei das Verhältnis von Borat:Borsäure 1:5 beträgt.

3. Nicht brennbarer Hartschaum nach Anspruch 1 oder 2, dadurch gekennzeichnet, daß der Schaumstabilisator pyrogene Kieselsäure ist.

4. Nicht brennbarer Hartschaum nach Ansprüchen 1 bis 3, dadurch gekennzeichnet, daß das Aluminiumhydroxid eine Siebdurchgangssummenkurve mit den Werten

| 25% | 5,5 µm |
|---|---|
| 50% | 52,0 µm |
| 75% | 80,0 µm. |

aufweist.

5. Verwendung des Hartschaumes nach Ansprüchen 1 bis 4 als nicht brennbaren Baustoff.

6. Verwendung nach Anspruch 5, in Form vorgefertigter Teile, wie Platten, Halbschalen, Rohrummantelungen.

7. Verwendung nach Anspruch 5, zum Ausschäumen von Hohlräumen im Bauwesen vor Ort.

## Revendications

1. Mousse non-combustible, à base de résine phénolique et de résine furannique et contenant de l'hydroxyde d'aluminium en tant que charge, le composant de résine étant formé en faisant réagir une résine phénolique, de l'alcool furfurylique et un acide sulfonique servant de durcisseur, caractérisée en ce que le rapport en poids masse de résine/mélange formant charge est égal à 1:2,5 à 1:3,2 et, le volume spécifique égal à 50 kg/m³ à 450 kg/m³, et en ce que le constituant de résine a été obtenu en faisant réagir:

50 à 62 parties en poids de résol,
0 à 15 parties en poids de résine furannique,
25 à 40 parties en poids d'alcool furfurylique,
0,5 à 1,5 partie en poids de stabilisateur de mousse, avec, pour 100 parties en poids de constituant de résine et de mélange formant charge, 14 à 17 parties en poids d'un mélange durcisseur formé de:

40 à 50 parties en poids d'acide phosphorique,
12 à 17 parties d'acide borofluorhydrique,
6 à 17 parties en poids d'acide p-toluène sulfonique ou d'acide p-phénol-sulfonique et
32 à 35% parties en poids d'eau.

2. Mousse non-combustible suivant la revendication 1, caractérisée en ce que le mélange formant charge est constitué de:

40 à 55 parties en poids d'hydroxyde d'aluminium,
10 à 35 parties en poids d'acide borique,
2 à 7 parties en poids de tétraborate de sodium,

5 à 10 parties en poids de bioxyde de manganèse,
1 à 5 parties en poids d'oxyde de cuivre II,
1 à 4 parties en poids d'hydroxysilicate de magnésium et
1 à 2 parties en poids de silicate d'aluminium,
le rapport borate/acide borique étant égal à 1:5.

3. Mousse non-combustible suivant l'une des revendications 1 et 2, caractérisée en ce que le stabilisateur de mousse est de l'acide silicique pyrogéné.

4. Mousse non-combustible suivant l'une des revendications 1 à 3, caractérisée en ce que l'hydroxyde d'aluminium offre une courbe granulométrique cumulée des particules passant à travers des tamis de maille variable ayant les valeurs:

| | |
|---|---|
| 25% | 5,5 µm |
| 50% | 52,0 µm |
| 75% | 80,0 µm |

5. Utilisation d'une mousse suivant l'une des revendications 1 à 4 en tant que matériau de construction non-combustible.

6. Utilisation suivant la revendication 5, sous la forme d'éléments préfabriqués, tels que des plaques, des demi-coquilles et des gaines pour tubes.

7. Utilisation suivant la revendication 5, servant à la réalisation d'espaces vides dans le domaine de la construction par formation de mousse sur place.

**Claims**

1. A non-flammable rigid foam on the basis of phenolic resin and furane resin, containing aluminium hydroxide as filler, the resin component being formed by reaction of phenolic resin, furfuryl alcohol and a sulphonic acid as curing agent, characterized in that the mass ratio of resin substance:filler mixture is 1:2,5 and up to 1:3,2 and the bulk density is from 50 kg/m$^3$ to 450 kg/m$^3$, and the resin component being formed by reaction of:

| | |
|---|---|
| 50—62 | mass parts resolic resin |
| 0—15 | mass parts furan resin |
| 25—40 | mass parts furfuryl alcohol |
| 0,5—1,5 | mass parts foam stabilizer including |
| 14—17 | mass parts per 100 mass parts resin component and filler mixture of a curing agent mixture composed of |
| 40—50 | mass parts phosphoric acid |
| 12—17 | mass parts boron hydrofluoric acid |
| 6—7 | mass parts p-toluene sulphonic acid or p-phenol sulphonic acid and |
| 32—35 | mass parts water. |

2. A non-flammable rigid foam according to Claim 1, characterized in that the filler mixture is composed of:

| | |
|---|---|
| 40—55 | mass parts aluminium hydroxide |
| 10—35 | mass parts boric acid |
| 2—7 | mass parts sodium tetraborate |
| 5—10 | mass parts manganese dioxide |
| 1—5 | mass parts copper-II oxide |
| 1—4 | mass parts magnesium hydroxide silicate |
| 1—2 | mass parts aluminium silicate, |

the ratio of borate:boric acid being 1:5.

3. A non-flammable rigid foam according to Claim 1 or 2, characterized in that the foam stabilizer is pyrogenic silicic acid.

4. A non-flammable rigid foam according to Claims 1—3, characterized in that the aluminium hydroxide has a screen analysis curve according to the following screen passing data

| | |
|---|---|
| 25% | 5.5 µm |
| 50% | 52.0 µm |
| 75% | 80.0 µm |

5. Use of the rigid foam according to Claims 1—4 as a non-flammable building material.

6. Use according to Claim 5 in the form of premanufactured parts, such as panels, half-shells, pipe jacketing.

7. Use according to Claim 5 for in-situ filling of cavities in building constructions with foam.